# EUROPEAN PATENT SPECIFICATION

(11) **EP 2 440 403 B1**
(45) Date of publication and mention of the grant of the patent: **11.03.2020**
(21) Application number: 10782069.8
(22) Date of filing: 10.06.2010
(51) Int. Cl.: B32B 15/04

(54) **AIRCRAFT TRANSPARENCY WITH SOLAR CONTROL PROPERTIES**
FLUGZEUGTRANSPARENZSYSTEM MIT SONNENSTEUERUNGSFUNKTION
TRANSPARENCE D'AVION AVEC PROPRIÉTÉS DE COMMANDE SOLAIRE

(30) Priority: 12.06.2009 US 186465 P; 19.08.2009 US 235130 P
(43) Date of publication of application: 18.04.2012
(73) Proprietor: PPG Industries Ohio, Inc., Cleveland, OH 44111 (US)
(72) Inventor: RASHID, Ali, Covington KY 41011 (US); BUHAY, Harry, Allison Park Pennsylvania 15101 (US); HARRIS, Caroline S., Pittsburgh Pennsylvania 15206 (US); BASIL, John D., Pittsburgh Pennsylvania 15215 (US); HUNIA, Robert M., Kittanning Pennsylvania 16201 (US)
(74) Representative: f & e patent
(86) International application number: PCT/US2010/038182
(87) International publication number: WO 2010/144709

(56) References cited:
- WO-A1-2009/064742
- WO-A2-2008/127370
- US-A1- 2003 180 547
- US-A1- 2007 026 235
- US-A1- 2007 122 598

## Description

### BACKGROUND OF THE INVENTION

### 1. Field of the Invention

This invention relates generally to an aircraft transparency having solar control properties.

### 2. Technical Considerations

Aircraft transparencies, such as aircraft cockpit or cabin windows, are typically made of one or more polymeric substrates mounted in a framework. Polymer substrates are lighter in weight than glass substrates, which decreases the overall weight of the aircraft, which in turn saves fuel. Also, these polymer substrates have higher fracture toughness than glass substrates providing improved safety. These conventional cabin windows allow passengers to see out of the aircraft and allow sunlight to enter the cabin. However, the transmission of solar energy through the cabin window can increase the temperature inside the cabin, which can increase the load on the aircraft's air conditioning system.

In an effort to decrease the heat load transmitted through conventional cabin windows, various shading devices have been developed. These can range from simple devices, such as an opaque sun shade that can be raised and lowered, to complex devices, such as electrochromic devices that darken upon the application of an electrical potential. However, these shading devices also have some drawbacks. If a passenger uses the sun shade or darkens the electrochromic device to cut down on the heat transfer into the cabin, the passenger can no longer enjoy the view out of the window. Also, solar energy passing through the cabin window can heat up or damage the components of the electrochromic device.

Therefore, it would be advantageous to provide an aircraft transparency, such as an aircraft cabin window, that has improved solar control properties compared to prior aircraft transparencies but that does not substantially adversely impact upon a passenger's view out of the aircraft transparency.

US 2007/0122598 A1 concerns duplex coatings that include a siloxane based soft coating and a plasma based SiOₓC_{y} coating applied to stretched acrylic substrates in order to improve their durability in aircraft window applications. The siloxane based soft coating is mentioned to be prepared as a sol-gel polysiloxane coating from mixtures of a solvent, an organosiloxane, alkoxide and a catalyst.

WO 2009/064742 A1 relates to an electromagnetic radiation shielding devices including a first ply having a No. 1 surface and a No.2 surface and a second ply having a No. 3 surface and a No. 4 surface, wherein the No. 2 surface of the first ply faces the No.3 surface of the second ply. A first coating having three or more metallic layers is provided over at least a portion of the first ply, in particular the No. 2 surface, and a second coating comprising at least three metallic layers is formed over a at least a portion of the second ply, in particular the No. 3 surface.

WO 2008/127370 A2 relates to articles such as aircraft transparencies, which are coated with a specific primer, the primer comprising the reaction product of a polyepoxide and an amino-functional silane, wherein the reaction product, when hydrolyzed, comprises at least six silanol groups.

US 2003/0180547 A1 concerns a multilayer solar control coating, which comprises a stack of alternating antireflective layers and infrared reflective films.

US 2007/026235 A1 discloses a glazing system for automotive vehicle which includes a panel that is provided on its top side with a first protective coating system comprising a weathering layer and at least two abrasion-resistant layers and on the bottom side with a second protective system that comprises at least two abrasion resistant layers.

### SUMMARY OF THE INVENTION

The present invention relates to a method of making an aircraft transparency, which comprises the steps of: providing a first stretched acrylic ply having a first major surface and a second major surface; providing a second stretched acrylic ply having a third major surface and a fourth major surface; and providing a coating stack having solar control properties over at least a portion of one or more of the major surfaces. The coating stack comprises: a first primer layer formed over at least a portion of one of the major surfaces, the first primer layer comprising an epoxy amino siloxane-containing material; a solar coating formed over at least a portion of the first primer layer, the solar control coating comprising at least three metallic silver layers; a protective coating formed over at least a portion of the solar control coating, the protective coating comprising silica and alumina; a topcoat formed over at least a portion of the protective coating and comprising a polysiloxane material; and an overcoat formed over at least a portion of the topcoat and comprising a diamond-like carbon type coating. The polysiloxane material of the topcoat comprises the reaction product of (a) a hybrid copolymer comprising (i) a first monomer comprising a hydroxy functional organoacrylate; and (ii) a second monomer comprising an organoalkoxysilane, and (b) a second material comprising an organoalkoxysilane.

The present invention moreover relates to an aircraft transparency, which comprises a stretched acrylic ply having a first major surface and a second major surface. A topcoat is formed over at least a portion of at least one major surface of the ply, for example the outer surface, and comprises a polysiloxane material. An overcoat is formed over at least a portion of the topcoat and comprises a silicon oxycarbide coating. The topcoat comprises a polysiloxane polymer comprising the reaction product of: (a) a hybrid copolymer comprising (i) a first monomer comprising a hydroxy functional organoacrylate and (ii) a second monomer comprising an organoalkoxysilane, and (b) a second material comprising an organoalkoxysilane.

### BRIEF DESCRIPTION OF THE DRAWINGS

The invention will be described with reference to the following drawing figures wherein like reference numbers identify like parts throughout.
Fig. 1 is a side, sectional view (not to scale) of an aircraft transparency in the form of a cabin window assembly incorporating features of the invention;
Fig. 2 is a cross-sectional view (not to scale) of a coated cabin window ply of Fig. 1;
Fig. 3 is a cross-sectional view (not to scale) of a solar control coating useful for the invention;
Fig. 4 is a cross-sectional view (not to scale) of a portion of a coating stack incorporating features of the invention;
Fig. 5 is a cross-sectional view (not to scale) of a portion of a coating stack incorporating features of the invention;
Fig. 6 is a side, sectional view (not to scale) of another non-limiting aircraft transparency of the invention in the form of a cabin window assembly;
Fig. 7 is a cross-sectional view (not to scale) of a coated cabin window ply of Fig. 6; and
Fig. 8 is a side, sectional view (not to scale) of a further non-limiting aircraft transparency of the invention in the form of a cabin window assembly.

### DESCRIPTION OF THE PREFERRED EMBODIMENTS

As used herein, spatial or directional terms, such as "left", "right", "inner", "outer", "above", "below", and the like, relate to the invention as it is shown in the drawing figures. However, it is to be understood that the invention can assume various alternative orientations and, accordingly, such terms are not to be considered as limiting. Further, as used herein, all numbers expressing dimensions, physical characteristics, processing parameters, quantities of ingredients, reaction conditions, and the like, used in the specification and claims are to be understood as being modified in all instances by the term "about". Accordingly, unless indicated to the contrary, the numerical values set forth in the following specification and claims may vary depending upon the desired properties sought to be obtained by the present invention. At the very least, and not as an attempt to limit the application of the doctrine of equivalents to the scope of the claims, each numerical value should at least be construed in light of the number of reported significant digits and by applying ordinary rounding techniques. Moreover, all ranges disclosed herein are to be understood to encompass the beginning and ending range values and any and all subranges subsumed therein. For example, a stated range of "1 to 10" should be considered to include any and all subranges between (and inclusive of) the minimum value of 1 and the maximum value of 10; that is, all subranges beginning with a minimum value of 1 or more and ending with a maximum value of 10 or less, e.g., 1 to 3.3, 4.7 to 7.5, 5.5 to 10, and the like. Further, as used herein, the terms "formed over", "deposited over", or "provided over" mean formed, deposited, or provided on an underlying surface but not necessarily in direct contact with the surface. For example, a coating layer "formed over" a substrate does not preclude the presence of one or more other coating layers or films of the same or different composition located between the formed coating layer and the substrate. As used herein, the term "film" refers to a coating region of a desired or selected coating composition. A "layer" can comprise one or more "films". A "coating" or "coating stack" can comprise one or more "layers". As used herein, the terms "polymer" or "polymeric" include oligomers, homopolymers, copolymers, and terpolymers, e.g., polymers formed from two or more types of monomers or polymers. The terms "visible region" or "visible light" refer to electromagnetic radiation having a wavelength in the range of 380 nm to 780 nm. The terms "infrared region" or "infrared radiation" refer to electromagnetic radiation having a wavelength in the range of greater than 780 nm to 100,000 nm. The terms "ultraviolet region" or "ultraviolet radiation" mean electromagnetic energy having a wavelength in the range of 100 nm to less than 380 nm.

For purposes of the following discussion, the invention will be discussed with reference to use with an aircraft transparency in the form of an aircraft cabin window. However, it is to be understood that the invention is not limited to use with aircraft cabin windows. Therefore, it is to be understood that the specifically disclosed exemplary embodiments are presented simply to explain the general concepts of the invention and that the invention is not limited to these specific exemplary embodiments.

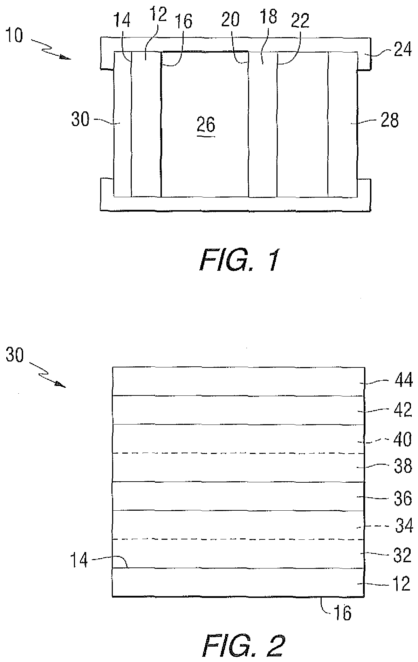

A non-limiting aircraft transparency 10 (e.g., cabin window assembly or cockpit window assembly) is illustrated in Fig. 1. The transparency 10 can have any desired visible light, infrared radiation, or ultraviolet radiation transmission and reflection. For example, the transparency 10 can have a visible light transmission of any desired amount, e.g., greater than 0% to 100% at a reference wavelength of 550 nanometers (nm). In one non-limiting embodiment, the visible light transmission at a reference wavelength of 550 nm can be at least 20%, such as at least 30%, such as at least 40%, such as at least 50%, such as at least 60%, such as at least 70%, such as at least 80%, such as at least 90%.

As shown in Fig. 1, the transparency 10 includes a first ply 12 with a first major surface 14 facing the aircraft exterior, i.e., an outer major surface (No. 1 surface) and an opposed second or inner major surface 16 (No. 2 surface). The transparency 10 also includes a second ply 18 having an outer (first) major surface 20 (No. 3 surface) and an inner (second) major surface 22 (No. 4 surface). This numbering of the ply surfaces is in keeping with conventional practice in the coating art. The first ply 12 and second ply 18 are held in a frame assembly 24 and are spaced apart with an air gap 26 therebetween. An optional electrochromic assembly 28 can be held in the frame assembly 24 and spaced from the second ply 18. In the non-limiting embodiment shown in Fig. 1, a coating stack 30 having solar control properties, e.g., incorporating a solar control coating or portion, is formed over at least a portion of at least one of the major surfaces, such as over the No. 1 surface 14 of the first ply 12. An anti-fogging panel, such as a glass pane coated with indium tin oxide, can be located behind the second ply 18. A dust cover can be located inboard of the electrochromic assembly 28.

The frame assembly 24 can be of any of several types known in the art. The frame assembly 24 can include a frame that surrounds a gasket to hold the plies 12 and 18 in a spaced-apart relationship. The frame can be made of any structurally stable material, such as but not limited to, a plastic or metal, e.g., aluminum, and operates to protect the gasket material from damage and to provide additional structural stability to the transparency 10. The air gap 26, among other things, provides thermal insulation between the atmosphere external of the aircraft cabin and the atmosphere within the cabin. Non-limiting examples of suitable frame assemblies 24 are described, for example, in U.S. Patent Nos. 6,561,460 and 6,783,099.

The plies 12, 18 of the transparency 10 can be of the same or different materials and can include any desired material having any desired characteristics. For example, one or more of the plies 12, 18 can be transparent or translucent to visible light. By "transparent" is meant having visible light transmission of greater than 0% to 100%. Alternatively, one or more of the plies 12, 18 can be translucent. By "translucent" is meant allowing electromagnetic energy (e.g., visible light) to pass through, but diffusing this energy such that objects on the side opposite the viewer are not clearly visible. Examples of suitable materials for the plies 12, 18 include, but are not limited to, plastic substrates (such as acrylic polymers, such as polyacrylates; polyalkylmethacrylates, such as polymethylmethacrylates, polyethylmethacrylates, polypropylmethacrylates, and the like; polyurethanes; polycarbonates; polyalkylterephthalates, such as polyethyleneterephthalate (PET), polypropyleneterephthalates, polybutyleneterephthalates, and the like; polysiloxane-containing polymers; or copolymers of any monomers for preparing these, or any mixtures thereof); ceramic substrates; glass substrates; or combinations of any of the above. As set forth above, the aircraft transparency according to the present invention includes at least one stretched acrylic ply. In one non-limiting embodiment, both of the plies 12, 18 are made of a polymeric material, such as stretched acrylic. However, in other embodiments, one of the plies 12, 18 can be conventional soda-lime-silicate glass, borosilicate glass, leaded glass, low iron glass, lithium doped glass, or lithium alumina silicate glass. One of the glass plies can be clear glass, i.e., non-tinted or non-colored glass, or can be tinted or otherwise colored glass. The glass can be annealed, heat-treated, or chemically tempered glass. As used herein, the term "heat-treated" means tempered or at least partially tempered. The glass can be of any type, such as conventional float glass, and can be of any composition having any optical properties, e.g., any value of visible transmission, ultraviolet transmission, infrared transmission, and/or total solar energy transmission. In the non-limiting embodiment shown in Fig. 1, the first and second plies 12, 18 are both acrylic substrates, such as stretched acrylic substrates.

The first and second plies 12, 18 can be of any desired dimensions, e.g., length, width, shape, or thickness. While the dimensions of the transparency 10 are not limiting to the invention, in one non-limiting embodiment for aircraft window assemblies having overall dimensions of approximately 20 inches (51 cm) in width by 25 inches (64 cm) in height and an overall thickness in the range of 1.5 to 2.5 inches (3.8 to 6.4 cm), an air gap 26 thickness in the range of 1.0 inch (2.54 cm) to 2.0 inches (5.08 cm) is acceptable.

The plies 12, 18 can be of any thickness. However, as can be appreciated by those skilled in the art, increasing the thickness of plies 12, 18, beyond that needed to withstand the rigors of flight, undesirably increases the weight of the transparency 10. For example, and without limiting the present invention, for many applications, a ply thickness ranging from 0.20 to 0.40 inch (0.51 to 1.02 cm) is acceptable to withstand the rigors of flight. In one particular non-limiting embodiment, the plies 12, 18 are stretched acrylic and have a thickness ranging from 0.31 to 0.40 inch (0.79 to 1.02 cm).

The coating stack 30 having solar control properties is deposited over at least a portion of a major surface of one of the plies 12, 18. In the non-limiting embodiment shown in Fig. 1, the coating stack 30 is formed over at least a portion of the outer major surface 14 of the first (outboard) ply 12. An exemplary coating stack 30 useful for the invention is shown in Fig. 2. In this non-limiting embodiment, the coating stack 30 includes a first primer layer 32, an optional first (inner) protective coating 34 (for example, providing barrier or adhesion promoting properties), a solar control coating 36, a second (outer) protective coating 38 (for example, providing adhesion promoting properties), an optional second (outer) primer layer 40, a topcoat 42, and an overcoat 44.

The primer layer 32 aids in adhering the solar control coating 36 to the substrate (ply) 12 and also provides an intermediate stiffness between the substrate, e.g., stretched acrylic ply 12, and the subsequently applied coatings. Suitable primer materials include, but are not limited to, siloxane based primers, organosilane primers, epoxy amino siloxane primers, polysiloxane primers, and acrylic primers. Examples of suitable primer materials are described in U.S. Patent Nos. 5,939,188; 4,670,350; 4,816,288; 4,725,501; 5,994,452; 6,110,327; and 5,776,548. The primer layer 32 can be applied in any conventional manner, such as by flow coating. In one particular non-limiting embodiment, the primer layer 32 comprises a polysiloxane or an epoxy amino siloxane material and has a thickness in the range of 0.1 to 10 microns, such as 0.5 to 8 microns, such as 1 to 5 microns, such as 1 to 3 microns, such as 1 to 2 microns. Alternatively, for some substrates, such as polyurethane, the primer layer 32 can be eliminated.

An optional first protective coating 34 can be applied over the primer layer 32. The protective coating 34 can help protect the solar control coating 36 from mechanical and/or chemical attack by any materials leaching from the primer layer 32 or caused by any subsequent processing steps. The protective coating 34 can be of any desired material or mixture of materials, such as but not limited to, one or more inorganic materials. Examples of suitable materials include, but are not limited to, metal oxides, silicon oxides, aluminum oxides, aluminosilicates, silicon nitrides, silicon carbides, and silicon oxycarbides, just to name a few. In one exemplary embodiment, the protective coating 34 can include one or more metal oxide materials, such as but not limited to, oxides of zirconium, aluminum, silicon, or mixtures thereof. For example, the protective coating 34 can be a single coating layer comprising in the range of 0 wt.% to 100 wt.% alumina and/or 0 wt.% to 100 wt.% silica and/or 0 wt.% to 100 wt.% zirconium oxide. For example, the protective coating can include silica and alumina having, for example, 1 wt.% to 99 wt.% silica and 99 wt.% to 1 wt.% alumina, such as at least 70 wt.% silica and 30 wt.% or less alumina, such as at least 75 wt.% silica, such as at least 80 wt.% silica, such as at least 85 wt.% silica. In one particular non-limiting embodiment, the protective coating 34 comprises 85 wt.% silica and 15 wt.% alumina. Other materials, such as aluminum, chromium, hafnium, yttrium, nickel, boron, phosphorous, titanium, zirconium, and/or oxides thereof, can also be present, for example, to adjust the refractive index of the protective coating 34. In one non-limiting embodiment, the refractive index of the protective coating 34 can be in the range of 1 to 3, such as 1 to 2, such as 1.4 to 2, such as 1.4 to 1.8.

In one non-limiting embodiment, the protective coating 34 comprises a combination of silica and alumina having a thickness in the range of 5 nm to 5,000 nm, such as 5 nm to 3,000 nm, such as 5 nm to 2,000 nm, such as 5 nm to 1,000 nm, such as 10 nm to 500 nm, such as 20 nm to 300 nm, such as 50 nm to 300 nm, e.g., 50 nm to 200 nm, such as 50 nm to 150 nm, such as 50 nm to 120 nm, such as 60 nm to 120 nm, such as 70 nm to 120 nm, such as 70 nm to 100 nm, such as 70 nm to 80 nm. In a particular non-limiting embodiment, the protective coating can have a thickness of at least 50 nm, such as at least 60 nm, such as at least 70 nm, such as at least 75 nm, such as at least 100 nm, such as at least 110 nm, such as at least 120 nm, such as at least 150 nm, such as at least 200 nm.

In another non-limiting embodiment, the protective coating 34 comprises a multi-layer structure, e.g., a first layer with at least one second layer formed over the first layer. In one specific non-limiting embodiment, the first layer comprises alumina or a mixture or alloy comprising alumina and silica. For example, the first layer can be greater than 5 wt.% alumina, such as greater than 10 wt.% alumina, such as greater than 15 wt.% alumina, such as greater than 30 wt.% alumina, such as greater than 40 wt.% alumina, such as 50 wt.% to 70 wt.% alumina, such as in the range of 70 wt.% to 100 wt.% alumina and 30 wt.% to 0 wt.% silica, such as greater than 90 wt.% alumina, such as greater than 95 wt.% alumina. In one non-limiting embodiment, the first layer comprises all or substantially all alumina. In one non-limiting embodiment, the first layer can have a thickness in the range of greater than 0 nm to 1 micron, such as 5 nm to 10 nm, such as 10 nm to 25 nm, such as 10 nm to 15 nm.

The second layer can comprise silica or a mixture or alloy comprising silica and alumina. For example, the second layer can comprise a silica/alumina mixture having greater than 40 wt.% silica, such as greater than 50 wt.% silica, such as greater than 60 wt.% silica, such as greater than 70 wt.% silica, such as greater than 80 wt.% silica, such as in the range of 80 wt.% to 90 wt.% silica and 10 wt.% to 20 wt.% alumina, e.g., 85 wt.% silica and 15 wt.% alumina. In one non-limiting embodiment, the second layer can have a thickness in the range of greater than 0 nm to 2 microns, such as 5 nm to 500 nm, such as 5 nm to 200 nm, such as 10 nm to 100 nm, such as 30 nm to 50 nm, such as 35 nm to 40 nm. In another non-limiting embodiment, the second layer can have a thickness in the range of greater than 0 nm to 1 micron, such as 5 nm to 10 nm, such as 10 nm to 25 nm, such as 10 nm to 15 nm. In another non-limiting embodiment, the protective coating 34 can be a bilayer formed by one metal oxide-containing layer (e.g., a silica and/or alumina-containing first layer) formed over another metal oxide-containing layer (e.g., a silica and/or alumina-containing second layer). The individual layers of the multi-layer protective coating can be of any desired thickness. Non-limiting examples of suitable protective coatings are described, for example, in U.S. Patent Application Nos. 10/007,382; 10/133,805; 10/397,001; 10/422,094; 10/422,095; and 10/422,096.

The protective coating 34 can be deposited by any conventional method, such as but not limited to, conventional chemical vapor deposition (CVD) and/or physical vapor deposition (PVD) methods. Examples of CVD processes include spray pyrolysis. Examples of PVD processes include electron beam evaporation and vacuum sputtering (such as magnetron sputter vapor deposition (MSVD)). Other coating methods could also be used, such as but not limited to, sol-gel deposition. In one non-limiting embodiment, the protective coating can be deposited by MSVD.

A solar control coating 36 is deposited over the primer layer 32 (or over the protective coating 34, if present). As used herein, the term "solar control coating" refers to a coating comprised of one or more layers or films that affect the solar properties of the coated article, such as but not limited to, the amount of solar radiation, for example, visible, infrared, or ultraviolet radiation, reflected from, absorbed by, or passing through the coated article; shading coefficient; emissivity, etc. The solar control coating 36 can block, absorb or filter selected portions of the solar spectrum, such as but not limited to the IR, UV, and/or visible spectrums. Examples of solar control coatings that can be used in the practice of the invention are found, for example but not to be considered as limiting, in U.S. Patent Nos. 4,898,789; 5,821,001; 4,716,086; 4,610,771; 4,902,580; 4,716,086; 4,806,220; 4,898,790; 4,834,857; 4,948,677; 5,059,295; and 5,028,759, and also in U.S. Patent Application No. 09/058,440.

In one non-limiting embodiment, the solar control coating 36 includes one or more metallic films positioned between pairs of dielectric layers. The solar control coating 36 can be a heat and/or radiation reflecting coating and can have one or more coating layers or films of the same or different composition and/or functionality. For example, the solar control coating 36 can be a single-layer coating or a multi-layer coating and can include one or more metals, non-metals, semi-metals, semiconductors, and/or alloys, compounds, compositions, combinations, or blends thereof. For example, the solar control coating 36 can be a single-layer metal oxide coating, a multiple-layer metal oxide coating, a non-metal oxide coating, a metallic nitride or oxynitride coating, a non-metallic nitride or oxynitride coating, or a multiple-layer coating comprising one or more of any of the above materials. In one non-limiting embodiment, the solar control coating 36 can be a doped metal oxide coating.

Non-limiting examples of suitable solar control coatings for use with the invention are commercially available from PPG Industries, Inc. of Pittsburgh, Pennsylvania under the SUNGATE® and SOLARBAN® families of coatings. Such coatings typically include one or more anti-reflective coating films comprising dielectric or anti-reflective materials, such as metal oxides or oxides of metal alloys, which are transparent to visible light. These coatings also include one or more infrared reflective films comprising a reflective metal, e.g., a noble metal such as gold, copper or silver, or combinations or alloys thereof, and can further comprise a sacrificial primer film or barrier film, such as titanium, as is known in the art, located over and/or under the metal reflective layer. The solar control coating 36 can have any desired number of infrared reflective films, such as but not limited to, 1 to 8 infrared reflective films. In one non-limiting embodiment, the solar control coating 36 can have 1 or more metallic silver layers, e.g., 2 or more silver layers, e.g., 3 or more silver layers, such as 4 or more silver layers, such as 5 or more silver layers, such as 6 or more silver layers. A non-limiting example of a suitable solar control coating having three silver layers is disclosed in U.S. Patent Application No. 10/364,089 (Publication No. 2003/0180547 A1).

The solar control coating 36 can be deposited by any conventional method, such as but not limited to, conventional chemical vapor deposition (CVD) and/or physical vapor deposition (PVD) methods. Examples of CVD processes include spray pyrolysis. Examples of PVD processes include electron beam evaporation, RF plasma deposition, and vacuum sputtering (such as magnetron sputter vapor deposition (MSVD)). Other coating methods could also be used, such as but not limited to, sol-gel deposition. In one non-limiting embodiment, the coating can be deposited by MSVD.

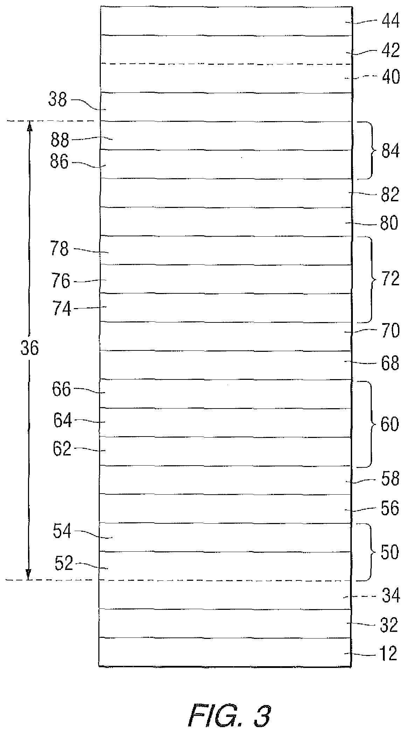

A non-limiting solar control coating 36 suitable for the invention is shown in Fig. 3. This exemplary solar control coating 36 includes a base layer or first dielectric layer 50 deposited over at least a portion of the primer layer 32 (or the protective coating 34, if present). The first dielectric layer 50 can comprise one or more films of anti-reflective materials and/or dielectric materials, such as but not limited to, metal oxides, oxides of metal alloys, nitrides, oxynitrides, or mixtures thereof. The first dielectric layer 50 can be transparent to visible light. Examples of suitable metal oxides for the first dielectric layer 50 include oxides of titanium, hafnium, zirconium, niobium, zinc, bismuth, lead, indium, tin, and mixtures thereof. These metal oxides can have small amounts of other materials, such as manganese in bismuth oxide, tin in indium oxide, etc. Additionally, oxides of metal alloys or metal mixtures can be used, such as oxides containing zinc and tin (e.g., zinc stannate), oxides of indium-tin alloys, silicon nitrides, silicon aluminum nitrides, or aluminum nitrides. Further, doped metal oxides, such as antimony or indium doped tin oxides or nickel or boron doped silicon oxides, can be used. The first dielectric layer 50 can be a substantially single phase film, such as a metal alloy oxide film, e.g., zinc stannate, or can be a mixture of phases composed of zinc and tin oxides or can be composed of a plurality of metal oxide films, such as indium tin oxide, or those disclosed in U.S. Patent Nos. 5,821,001; 4,898,789; and 4,898,790.

In the illustrated exemplary embodiment shown in Fig. 3, the first dielectric layer 50 comprises a multi-film structure having a first film 52, e.g., a metal alloy oxide film, and a second film 54, e.g., a metal oxide or oxide mixture film, deposited over the first metal alloy oxide film. In one non-limiting embodiment, the first film 52 can be a zinc/tin oxide mixture or a zinc/tin alloy oxide. The zinc/tin alloy oxide can be obtained from magnetron sputter vacuum deposition from a cathode of zinc and tin that can comprise zinc and tin in proportions of 10 wt.% to 90 wt.% zinc and 90 wt.% to 10 wt.% tin. One suitable metal alloy oxide that can be present in the first film is zinc stannate. By "zinc stannate" is meant a composition of Zn_{X}Sn_{1-X}O_{2-X} (Formula 1) where "x" varies in the range of greater than 0 to less than 1. For instance, "x" can be greater than 0 and can be any fraction or decimal between greater than 0 to less than 1. For example, where x = 2/3, Formula 1 is Zn_{2/3}Sn_{1/3}O_{4/3}, which is more commonly described as "Zn₂SnO₄". A zinc stannate-containing film has one or more of the forms of Formula 1 in a predominant amount in the film. In one non-limiting embodiment, the first film 52 comprises zinc stannate and has a thickness in the range of 100 Angstroms (Å) to 1,000 Å, such as 100 Å to 800 Å, such as 100 Å to 500 Å, such as 150 Å to 500 A, such as 200 Å to 500 A, such as 300 Å to 500 Å, such as 300 Å to 400 Å, such as 376 Å.

The second film 54 can be a zinc-containing film, such as zinc oxide. The zinc oxide film can be deposited from a zinc cathode that includes one or more other materials to improve the sputtering characteristics of the cathode. For example, the zinc cathode can include a small amount (e.g., up to 10 wt.%) of tin to improve sputtering. In which case, the resultant zinc oxide film would include a small percentage of tin oxide, e.g., up to 10 wt.% tin oxide. An oxide coating sputtered from a zinc cathode having up to 10 wt.% tin is referred to herein as a "zinc oxide" film even though some tin oxide may be present. The second film 54 can have a thickness in the range of 10 Å to 200 Å, such as 20 Å to 200 Å, such as 30 Å to 200 Å, 40 Å to 150 Å, e.g., 50 Å to 100 Å, such as 60 Å to 100 Å, such as 60 Å to 80 Å, such as 70 Å to 80 Å, such as 73 Å.

A first heat and/or radiation reflective film or layer 56 is deposited over the first dielectric layer 50. The first reflective layer 56 includes a reflective metal, such as but not limited to, metallic gold, copper, silver, or mixtures, or alloys thereof. In one embodiment, the first reflective layer 56 comprises a metallic silver layer having a thickness in the range of 25 Å to 300 Å, e.g., 50 Å to 300 Å, e.g., 50 Å to 200 Å, such as 70 Å to 150 Å, such as 70 Å to 100 Å, such as 80 Å to 100 Å, such as 90 Å to 100 Å, such as 90 Å.

A first sacrificial primer film 58 is deposited over the first reflective layer. The first sacrificial primer film 58 can be an oxygen-capturing material, such as titanium, that can be sacrificial during the deposition process to prevent degradation or oxidation of the first reflective layer 56 during the sputtering process or subsequent heating processes. The oxygen-capturing material can be chosen to oxidize before the material of the first reflective layer 56. If titanium is used as the first primer film 58, the titanium would preferentially oxidize to titanium dioxide before oxidation of the underlying silver layer. In one embodiment, the first primer film 58 is titanium having a thickness in the range of 5 Å to 50 Å, e.g., 10 Å to 40 Å, e.g., 15 Å to 25 Å, e.g., 15 Å to 20 Å, e.g., 15 Å.

A second dielectric layer 60 is deposited over the first reflective layer 56 (e.g., over the first sacrificial primer film 58). The second dielectric layer 60 comprises one or more metal oxide or metal alloy oxide-containing films, such as those described above with respect to the first dielectric layer. In the illustrated non-limiting embodiment, the second dielectric layer 60 includes a first 62, such as a metal oxide film, e.g., a zinc oxide film deposited over the first sacrificial primer film 58. A second film 64, such as a metal alloy oxide film, e.g., a zinc stannate film, is deposited over the first zinc oxide film 62. A third film 66, such as a metal oxide film, e.g., another zinc/tin oxide layer, is deposited over the zinc stannate layer to form a multi-film second dielectric layer 60. In one non-limiting embodiment, the zinc oxide films of the second dielectric layer can each have a thickness in the range of about 10 Å to 200 Å, e.g., 20 Å to 150 Å, e.g., 30 Å to 100 Å, e.g., 40 Å to 80 Å, e.g., 50 Å to 80 Å, e.g., 60 Å to 80 Å, e.g., 70 Å to 80 Å, such as 73 Å. The metal alloy oxide layer (zinc stannate) can have a thickness in the range of 100 Å to 1000 Å, e.g., 200 Å to 1000 Å, e.g., 300 Å to 800 Å, e.g., 500 Å to 800 Å, e.g., 600 Å to 800 Å, e.g., 600 Å to 700 Å; e.g., 631 Å.

A second heat and/or radiation reflective layer 68 is deposited over the second dielectric layer 60. The second reflective layer 68 can include any one or more of the reflective materials described above with respect to the first reflective layer 56. In one non-limiting embodiment, the second reflective layer 68 comprises silver having a thickness in the range of 25 Å to 200 Å, e.g., 50 Å to 150 Å, e.g., 60 Å to 100 Å, e.g., 70 Å to 100 Å, e.g., 80 Å to 90 Å, e.g., 83 Å.

A second sacrificial primer film 70 can be deposited over the second reflective layer 68. The second sacrificial primer film 70 can be any of the materials described above with respect to the first primer film 32. In one non-limiting embodiment, the second primer film 70 includes titanium having a thickness in the range of about 5 Å to 50 Å, e.g., 10 Å to 25 Å, e.g., 15 Å to 25 Å, e.g., 15 Å to 20 Å, e.g., 15 Å.

A third dielectric layer 72 is deposited over the second reflective layer 68 (e.g., over the second sacrificial primer film 70). The third dielectric layer 72 can also include one or more metal oxide or metal alloy oxide-containing layers, such as discussed above with respect to the first and second dielectric layers. In one non-limiting embodiment, the third dielectric layer 72 is a multi-film layer similar to the second dielectric layer 60. For example, the third dielectric layer 72 can include a first layer 74, such as a metal oxide layer, e.g., a zinc oxide layer, a second layer 76, such as a metal alloy oxide-containing layer, e.g., a zinc stannate layer, and a third layer 78, such as a metal oxide layer, e.g., another zinc oxide layer. In one non-limiting embodiment, the zinc oxide films of the third dielectric layer 72 can each have a thickness in the range of about 10 Å to 200 Å, e.g., 20 Å to 150 Å, e.g., 30 Å to 100 Å, e.g., 40 Å to 80 Å, e.g., 50 Å to 80 Å, e.g., 60 Å to 80 Å, e.g., 70 Å to 80 Å, e.g., 73 Å. The metal alloy oxide layer (zinc stannate) can have a thickness in the range of 100 Å to 1000 Å, e.g., 200 Å to 1000 Å, e.g., 300 Å to 800 Å, e.g., 500 Å to 800 Å, e.g., 600 Å to 800 Å, e.g., 600 Å to 700 Å, e.g., 631 Å.

A third heat and/or radiation reflective layer 80 is deposited over the third dielectric layer 72. The third reflective layer 80 can be of any of the materials discussed above with respect to the first and second reflective layers. In one non-limiting embodiment, the third reflective layer 80 comprises silver having a thickness in the range of 25 Å to 200 Å, e.g., 50 Å to 150 Å, e.g., 60 Å to 100 Å, e.g., 70 Å to 100 Å, e.g., 80 Å to 90 Å, e.g., 83 Å.

A third sacrificial primer film 82 is deposited over the third reflective layer 80. The third primer film 82 can be of any of the primer materials described above with respect to the first or second primer films. In one non-limiting embodiment, the third sacrificial primer film 82 is titanium and has a thickness in the range of 5 Å to 50 Å, e.g., 10 Å to 25 Å, e.g., 15 Å to 20 Å, e.g., 15 Å.

A fourth dielectric layer 84 is deposited over the third reflective layer 80 (e.g., over the third sacrificial primer film 82). The fourth dielectric layer 84 comprises one or more metal oxide or metal alloy oxide-containing layers, such as those discussed above with respect to the first, second, or third dielectric layers. In one non-limiting embodiment, the fourth dielectric layer 84 is a multi-film layer having a first layer 86, such as a metal oxide layer, e.g., a zinc oxide layer, deposited over the third primer film 82, and a second layer 88, such as a metal alloy oxide layer, e.g., a zinc stannate layer, deposited over the zinc oxide layer. The zinc oxide layer 86 can have a thickness in the range of 10 Å to 200 Å, such as 20 Å to 200 Å, such as 30 Å to 200 Å, 40 Å to 150 Å, e.g., 50 Å to 100 Å, such as 60 Å to 100 Å, such as 60 Å to 80 Å, such as 70 Å to 80 Å, such as 73 Å. The zinc stannate layer 88 can have a thickness in the range of 100 Å to 1,000 Å, such as 100 Å to 500 Å, such as 150 Å to 500 Å, e.g., 200 Å to 500 Å, e.g., 300 Å to 400 Å, e.g., 376 Å.

As shown in Figs. 2 and 3, the protective coating 38 is applied over the solar control coating 36, e.g., over the fourth dielectric layer 84, to assist in protecting the underlying layers, such as the anti-reflective layers, from mechanical and chemical attack during processing and/or to promote adhesion. The protective coating 38 can be an oxygen barrier coating layer to prevent or reduce the passage of ambient oxygen into the underlying layers of the coating, such as during heating or bending. The protective coating 38 can be the same as described below for the optional protective coating 34. In one non-limiting embodiment, the protective coating 38 comprises a combination of silica and alumina, such as in the range of 80 wt.% to 90 wt.% silica and 10 wt.% to 20 wt.% alumina, e.g., 85 wt.% silica and 15 wt.% alumina, having a thickness in the range of 5 nm to 5,000 nm, such as 5 nm to 3,000 nm, such as 5 nm to 2,000 nm, such as 5 nm to 1,000 nm, such as 10 nm to 500 nm, such as 20 nm to 300 nm, such as 50 nm to 300 nm, e.g., 50 nm to 200 nm, such as 50 nm to 150 nm, such as 50 nm to 120 nm, such as 60 nm to 120 nm, such as 70 nm to 120 nm, such as 70 nm to 100 nm, such as 70 nm to 80 nm, such as 78 nm. In a particular non-limiting embodiment, the protective coating can have a thickness of at least 50 nm, such as at least 60 nm, such as at least 70 nm, such as at least 75 nm, such as at least 100 nm, such as at least 110 nm, such as at least 120 nm, such as at least 150 nm, such as at least 200 nm.

An optional second primer layer 40 can be applied over the protective coating 38. The optional second primer layer 40 can be the same as described below for the first primer layer 32. In one particular non-limiting embodiment, the second primer layer 40 comprises an epoxy amino siloxane material and has a thickness in the range of 0.1 to 10 microns, such as 0.5 to 8 microns, such as 1 to 7 microns, such as 1 to 5 microns, such as 1 to 3 microns.

As set forth above, according to the present invention a specific topcoat is formed over at least a portion of a major surface of the coated ply. In the exemplary embodiment shown in Fig. 2, the topcoat 42 is applied over the protective coating 38 (or over the optional second primer layer 40, if present). The topcoat 42 provides abrasion resistance and/or craze resistance to the substrate 12. As set forth above, according to the present invention, the topcoat 42 comprises a polysiloxane material, which comprises the reaction product of (a) a hybrid copolymer comprising (i) a first monomer comprising a hydroxy functional organoacrylate; and (ii) a second monomer comprising an organoalkoxysilane, and (b) a second material comprising an organoalkoxysilane. Suitable topcoat materials are disclosed in WO 2007/064792 A2 and U.S. Patent Nos. 5,693,422; 6,106,605; 6,180,248; 5,401,579; and 6,469,119. Other suitable topcoat materials are commercially available from Advanced Materials and Coating Specialties under the names LensShield 500, 501, 503, 510, and 514. The topcoat 42 can have a thickness in the range of 1 to 10 microns, such as 2 to 8 microns, such as 3 to 7 microns, such as 4 to 6 microns, such as 4 to 5 microns. The topcoat can be applied by any conventional method, such as by flow coating.

The material for the topcoat 42 can incorporate a polymer having both polysiloxane-based hard coating functionality as well as more flexible organopolymeric functionality, such as but not limited to acrylic or epoxy functionality. Exemplary topcoat material can be made as follows and as described in the following examples.

A hybrid copolymer is prepared having at least two different monomer units. The hybrid copolymer is a copolymer prepared from the reaction product of (i) a first monomer comprising a hydroxy-functional organoacrylate and (ii) a second monomer comprising an organofunctional alkoxysilane, such as a silicon alkoxide with a polymerizable group.

In one non-limiting embodiment, the first monomer comprises a hydroxyacrylate and/or a hydroxyalkylacrylate. The alkyl portion of the hydroxyalkylacrylate can be generally represented by the formula CₙH₂ₙ₊₁ where n is in the range of 1-20, such as 1-10 such as 1-5. Specific examples of the first monomer include, but are not limited to hydroxymethylacrylate, hydroxyethylacrylate, and hydroxypropylacrylate.

The second monomer is an organofunctional alkoxysilane, such as an organofunctional trialkoxysilane. The alkoxide may contain alkyl or aryl groups. Silanes of the general formula RₓSi(OR')₄₋ₓ can be used, where R is an organic radical, R' is a low molecular weight alkyl radical, and x is in the range of 1 to 4. The organic radical of R can be, vinyl, methoxyethyl, 3-glycidoxypropyl, or 3-methacryloxypropyl, just to name a few. In one non-limiting embodiment, the second monomer is a trialkoxysilane of the general formula RSi(OR')₃, where R is a short to medium chain length organic group capable of undergoing polymerization such as vinyl, 3-glycidoxypropyl, or 3-methacryloxypropyl. In one particular embodiment, the second monomer is selected from methacryloxypropyltrimethoxysilane or vinyltrimethoxysilane.

The first and second monomers are combined with an appropriate catalyst, such as azobisisobutyrolnitrile (AIBN), to form a hybrid copolymer. In the broad practice of the invention, the first and second monomers can be combined in any ratio, such as 1 wt. % to 99 wt. % of the first monomer to 99 wt. % to 1 wt. % of the second monomer based on the total weight of the combined monomers, such as 40 wt. % to 90 wt. % of the first monomer, such as 50 wt. % to 80 wt. % of the first monomer, such as 60 wt. % to 80 wt. % of the first monomer, such as 70 wt. % to 80 wt. % of the first monomer, such as 75 wt. % of the first monomer. The hybrid copolymer can be polymerized by free radical polymerization.

The second material is reacted in the presence of the hybrid copolymer, for example by condensation polymerization, to form a polysiloxane polymer. This allows the second material to react with the hybrid copolymer as well as to polymerize with itself, for example by condensation polymerization, providing a mechanism for direct chemical bonding between the two polymeric components. The second material comprises an organoalkoxysilane. The organoalkoxysilane may be an alkylalkoxysilane or organofunctional alkoxysilane, such as an organofunctional trialkoxysilane, or a mixture thereof. In one non-limiting embodiment, the second material is a trialkoxysilane of the general formula RSi(OR')₃, where R is a short to medium chain length organic group such as alkyl, vinyl, phenyl, 3-glycidoxypropyl, or 3-methacryloxypropyl. In one particular embodiment, the second material is methyltrimethoxysilane.

The hybrid copolymer and the second material can be reacted by any known technique, such as a conventional condensation reaction. Examples of conventional techniques are described in U.S. Patent Nos. 5,693,422; 5,401,579; 6,106,605; 6,180,248; and 6,469,119. The hybrid copolymer and second material can be combined in any desired ratio, such as 1 wt. % to 99 wt. % of the hybrid copolymer to 99 wt. % to 1 wt. % of the second material based on the total weight of the hybrid copolymer and second material, such as 5 wt. % to 50 wt. % of the hybrid copolymer, such as 10 wt. % to 40 wt. % of the hybrid copolymer, such as 10 wt. % to 30 wt. % of the hybrid copolymer, such as 15 wt. % to 20 wt. % of the hybrid copolymer, such as 17 wt. % of the hybrid copolymer.

The resultant hybrid copolymer (i.e. the polymer formed from the reaction of the first hybrid copolymer and the second material) can be incorporated into a coating composition that provides improved scratch, abrasion, and chemical resistance, yet sufficient to survive deformation or elongation of the underlying plastic substrate without cracking or debonding. The acrylic functionality provides enhanced weatherability and improved adhesion to both acrylic and polycarbonate substrates compared to previous protective hardcoats. In the practice of the invention, forming the hybrid copolymer by copolymerizing a hydroxy-functional acrylic monomer with a trialkoxysilane provides a copolymer that can undergo further hydrolysis of the alkoxy groups, resulting in a condensation reaction with the polysiloxane matrix of the coating solution.

The hybrid copolymer need not be limited to a copolymer having two monomers but could include three or more monomers. For example, the resultant hybrid copolymer could be a terpolymer comprising a hydroxy-functional organoacrylate, a silicon alkoxide, and a non-hydroxy functional monomer, such as but not limited to methylmethacrylate or N-vinylpyrrolidone, or any such monomer that undergoes free radical polymerization. Moreover, the hybrid copolymer is not limited to alkylacrylates, but could incorporate other acrylic functional materials, such as but not limited to aromatic acrylates or halogenated acrylates, such as fluoracrylate. Also, in addition to forming organic/inorganic hybrid copolymers by co-polymerizing a (hydroxyfunctional) organic acrylate or methacrylate monomer with an acrylate or methacrylate functional silicon alkoxide, such organic-inorganic hybrid copolymers can be formed by combining any organic monomer with any silicon alkoxide compound that contains a polymerizable group that can undergo the same kind of polymerization reaction. 1,3-bis(3-methacryloxypropyl)tetrakis (trimethylsiloxy)disiloxane is a similar methacryloxypropyl-trimethylsiloxy compound. For example, vinyl, alkenyl, and styryl functional organosilanes such as vinyltrimethoxysilane, vinyltriethoxysilane, p-(t-butyldimethylsiloxy)stryrene, and vinyl terminated polydimethylsiloxane prepolymer can be copolymerized with organic monomers by thermal or UV initiated free radical polymerization, as can the acrylic and methacrylic functional organosilanes. Also, epoxy and glycidoxy-functional silicon alkoxides, bis[methyldimethoxysilyl)propyl]polypropyleneoxide, and epoxy terminated polydimethylsiloxane prepolymer can be co-polymerized with organic epoxides by cationic UV polymerization or amine addition polymerization. Further, monomers capable of undergoing condensation polymerization can be used to form hybrid polyimide, polyamide and urethane copolymers with the appropriate amine functional silicon compounds, such as 1,3-bis(aminopropyl)tetramethyldisiloxane. Monomers capable of undergoing substitution polymerization can be combined with silicon compounds such as bis(trimethylsilyl)bisphenol A to form hybrid copolymers by substitution polymerization. As recognized by those skilled in the art, various techniques for purifying the hybrid copolymer for, example by precipitation or fractionation, can be employed to obtain hybrid copolymer materials with a narrower distribution of properties and thereby affecting the properties of the coating composition.

The following examples illustrate various non-limiting embodiments of a topcoat material. However, it is to be understood that the invention is not limited to the specific examples.

### Formation of The Hybrid Copolymer

### Example 1

The following ingredients were combined in a glass jar: 70 grams (g) of Dowanol PM glycol ether, 22.5g of 2-hydroxypropylacrylate, 7.5g of gamma-methacryloxypropyltrimethoxysilane, and 0.06g of azobisisobutyrolnitrile (AIBN). The solution was outgassed for 5 minutes under vacuum, purged with nitrogen gas via a bubbler for 5 minutes, and placed in a nitrogen filled oven at 180°F overnight. The mixture was shaken several times over the first hour.

### Example 2

45 g of 2-hydroxypropylacrylate, 15 g of gamma-methacryloxypropyltrimethoxysilane, and 0.12 g of azobisisobutyrolnitrile (AIBN) were added to 140g of Dowanol PM glycol ether in a glass jar containing a magnetic stir bar. The jar was placed in an ultrasonic bath for five minutes to assist dissolution of the AIBN, outgassed in a vacuum dessicator for 15 minutes, and transferred to a nitrogen-purged reaction setup consisting of a 250 milliliter (mL) 3-neck round bottom flask that was fitted with a reflux condenser, heating mantle, and nitrogen bubbler and heated to maintain approximately 80°C overnight under nitrogen. The reaction mixture was allowed to cool to room temperature.

### Example 3

45 g of hydroxypropylacrylate (mixture of isomers), 15 g of gamma-methacryloxypropyltrimethoxysilane, and 0.12 g of azobisisobutyrolnitrile (AIBN) were added to 140g of Dowanol PM glycol ether in a glass jar containing a magnetic stir bar. The solution was stirred for 2-3 minutes to dissolve most of the AIBN, placed in an ultrasonic bath for five minutes, degassed in a vacuum dessicator for 30 minutes, and transferred to a nitrogen-purged reaction setup consisting of a 250 mL 3-neck round bottom flask that was fitted with a reflux condenser, heating mantle, and nitrogen bubbler. After 10 minutes of vigorous nitrogen purge through the solution, heating was begun with stirring. After 45 minutes of heating, the nitrogen purge was slowed to a minimum and the temperature reached 50°C. The heat was increased so that the temperature of the reaction reached 62°C within another 10 minutes, 78°C within 20 minutes, at which time the exothermic reaction was in progress. The temperature reached a maximum of approximately 107-108°C 15 minutes later, after which the exotherm subsided and the reaction mixture cooled to 70°C. After eight hours, the heat was again increased so that the reaction mixture reached 110°C within 1 hour, at which time the heat was removed and the reaction mixture allowed to cool slightly before using to prepare a coating solution.

### Example 4

Azobisisobutyrolnitrile (AIBN) had been recrystallized three times from methanol one week prior to use. In a manner similar to Example 3 above, the three ingredients were combined directly into a 500 mL 3-neck flask that was fitted with a reflux condenser, heating mantle, and nitrogen bubbler. The gamma-methacryloxypropyltrimethoxysilane was added to the hydroxypropylacrylate, which was then within 3 minutes added to the Dowanol PM glycol ether in the round bottom flask. After five minutes of stirring at room temperature, heating was begun. Twenty minutes later the temperature of the solution had reached 50°C and 0.10 g of AIBN dissolved in 10-15 mL of Dowanol PM was added via syringe through a rubber septum. Forty minutes later the temperature of the reaction mixture had reached the maximum of 119°C (60 minutes after start of reaction), after which it fell to 83°C which was maintained until the total reaction time reached 16 hours. After cooling to room temperature, the copolymer product was used to prepare a polysiloxane coating solution. Material that was not used immediately was transferred to a brown glass bottle and stored in a refrigerator. After seven weeks of refrigerated storage, the room temperature viscosity of the product solution was 61.1 centipoises (cps).

### Example 5

Recrystallized azobisisobutyrolnitrile (AIBN) was again recrystallized one time from methanol prior to use. In a manner similar to Example 3 above, the three ingredients were combined directly into the 250 mL 3-neck flask. First the gamma-methacryloxypropyltrimethoxysilane was added to the hydroxypropylacrylate, and then the mixture of the two monomers was added with stirring to 130g of Dowanol PM glycol ether solvent (130g) that had been purged with nitrogen in the 3-neck flask for 2 hours. Heating was begun immediately, with the reaction solution reaching 56°C after 24 minutes, at which time 0.10 g of AIBN was added. The reaction solution reached 117°C by 45 minutes after the start of the reaction. At approximately 1.25 hours reaction time, the temperature had fallen to 109°F at which time the heat was decreased to maintain a temperature of 86°C overnight. After a total time of 16.5 hours since start of the reaction, the heat was removed to allow the product to cool to room temperature in about an hour. The product was then used to prepare a polysiloxane coating solution or transferred to a brown glass bottle for refrigerated storage. After approximately 1 week of refrigerated storage, the viscosity of the product at room temperature was 130.6 cps.

### Example 6

22.5 g of 2-hydroxypropyl acrylate, 7.5 g of gamma-methacryloxypropyltrimethoxysilane, and 0.06 g of dimethoxy 2-phenyl acetophenone (DMPA) were added to 70.0 g of Dowanol PM glycol ether solvent in a glass jar and placed in an ultrasonic bath until the DMPA dissolved. The solution was then outgassed for 10 minutes under vacuum followed by curing for 1 hour at room temperature under an atmosphere of nitrogen in an ELC 4001 UV cure unit. The moderately viscous solution of the copolymer product was allowed to cool to room temperature prior to use in preparing a coating solution.

### Preparation of Coating Solutions

Method I: In one non-limiting method, copolymer products of the type produced in Examples 1-6 were incorporated into durable abrasion resistant coating formulations as follows. In a typical preparation, 15g of the copolymer product solution was added to 72g of methyltrimethoxysilane. In a separate container, 15g of methanol was combined with 44.1g of Snowtex O aqueous colloidal silica sol (commercially available from Nissan Chemical) and 3.6g of glacial acetic acid and 1 drop of concentrated nitric acid. The silane and copolymer mixture was slowly added into the aqueous silica solution with stirring. Stirring was continued overnight. The solution was then diluted with 125g of 1-propanol, 0.3 g of BYK-306 (commercially available from BYK Chemie) and 0.75g of 25% tetramethylammonium hydroxide in methanol (commercially available from Fisher Scientific).

Method II: In an alternate non-limiting method, 15g of the copolymer products of Examples 1-6 were combined with 72g of methyltrimethoxysilane and 45g of NPC-ST colloidal silica sol in glycol ether PM (commercially available from Nissan Chemical). In a separate container, 30 g of deionized water was combined with 3.6g of glacial acetic acid and 1 drop of concentrated nitric acid. The water-acid mixture was slowly added to the silane/copolymer/silica mixture with stirring, which was continued overnight. The solution was then diluted with 100g of 1-propanol, 0.3 g of BYK-306 (commercially available from BYK Chemie) and 0.75g of 25% tetramethylammonium hydroxide in methanol (commercially available from Fisher Scientific).

The coatings can be applied to acrylic substrates (coated or uncoated) by flow coating followed by drying in ambient air for 20 - 30 minutes and heat curing at 80°C for 4 hours.

An overcoat 44 (wear-resistant coating) is applied over the topcoat 42. The overcoat 44 comprises a silicon oxycarbide coating. Examples of suitable overcoat coatings are described in WO 2007/064792 A2. Other examples include DIAMONEX coatings, such as Everscan, Scanshield, AegisPlus, and DIAMONDSHIELD® coatings, commercially available from Morgan Technical Ceramics of Allentown, Pennsylvania. The overcoat 44 can have a thickness of 1 to 10 microns, such as 1 to 8 microns, such as 2 to 6 microns, such as 3 to 6 microns, such as 4 to 5 microns. The overcoat 44 can be applied by any conventional method, such as by direct ion beam deposition or RF plasma deposition.

The topcoat can have a thickness, for example, in the range of 7 microns to 10 microns.

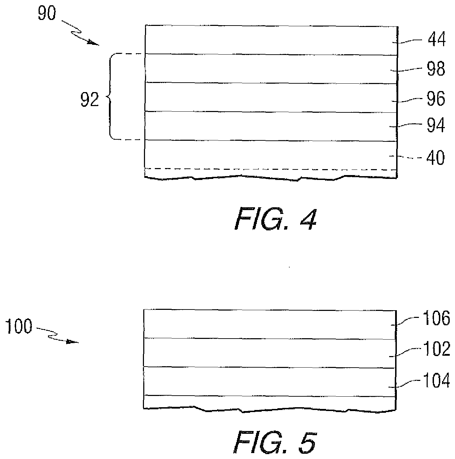

An alternative embodiment 90 of a topcoat 92 and overcoat 44 structure for the coating stack 30 is shown in Fig. 4 (only an outer portion of the coating stack 30 is illustrated). This embodiment 90 has a first topcoat layer 94 , a protective coating 96, a second topcoat layer 98, and an overcoat 44. The first topcoat layer material can be the same or different than the second topcoat layer material. As will be appreciated by one skilled in the coating art, forming a coating greater than a few microns by conventional flow coating techniques is very challenging. Therefore, in the embodiment 90 shown in Fig. 4, the topcoat 92 is formed in two separate steps. A first topcoat layer 94 (comprising a material as described above for the topcoat) is applied by flow coating to a thickness greater than 1 micron, such as in the range of 1 micron to 5 microns. A protective coating 96 (comprising a material as described below for the protective coating, e.g., 85 wt.% silica and 15 wt.% alumina) is applied by physical deposition, such as MSVD, to a thickness in the range of 10 nm to 500 nm, such as 50 nm to 200 nm, such as 50 nm to 150 nm, such as 100 nm. The second topcoat layer 98 (e.g., a polysiloxane or an epoxy amino siloxane material) is formed over the protective coating 96 by flow coating to a thickness greater than 1 micron, such as in the range of 1 micron to 5 microns). This technique of inserting the MSVD protective coating 96 between the two topcoat layers overcomes the problems associated with forming a single, unitary topcoat layer having a thickness greater than a few microns by flow coating. While only one protective coating 96 is shown, it is to be understood that multiple topcoat/protective coating/topcoat coatings could be present to increase the overall thickness of the coating stack. Additionally, rather than the outer coating be the overcoat 44 described above, the outermost layer could be of the protective coating material.

Another alternative embodiment 100 of a topcoat and overcoat structure for the coating stack 30 is shown in Fig. 5. In this embodiment 100, a protective coating 102 is formed between the topcoat 104 and the overcoat 106. The topcoat 104 (comprising a material as described above for the topcoat 42,) is applied by flow coating to a thickness greater than 1 micron, such as in the range of 1 micron to 5 microns. A protective coating 102 (comprising a material as described below for the protective coating 34, 38, e.g., 85 wt.% silica and 15 wt.% alumina) is applied by physical deposition, such as MSVD to a thickness in the range of 10 nm to 500 nm, such as 50 nm to 200 nm, such as 50 nm to 150 nm, such as 100 nm. The overcoat 106 (comprising a material as described above for the overcoat 44, e.g., a DIAMONDSHIELD® coating) is applied at a thickness greater than 1 micron, such as in the range of 4 microns to 5 microns, by direct ion beam deposition or RF plasma deposition. Forming the protective coating 102 between the topcoat 104 and the overcoat 106 provides additional protection to the underlying coating layers against chemical and/or mechanical damage.

The electrochromic assembly 28 (see Fig. 1) can include any conventional electrochromic devices that change luminous transmittance in response to the application or removal of an electric potential. Examples of suitable electrochromic devices are described in U.S. Patent Nos. 6,561,460 and 6,783,099.

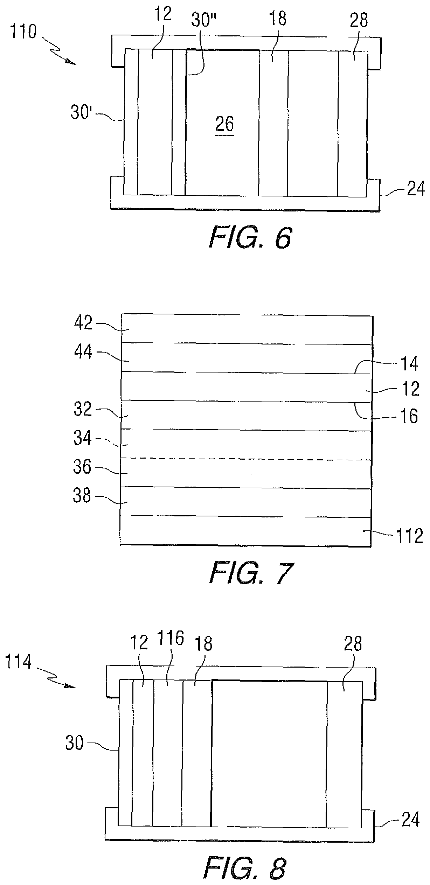

Another window assembly 110 is shown in Fig. 6. This window assembly 110 is similar to the one shown in Fig. 1 except that portions 30' and 30" of the coating stack 30 are formed over different surfaces. For example, one portion 30' can be formed on the No. 1 surface (surface 14) and another portion 30" can be formed on another surface, such as the No. 2 surface (surface 16) or the No. 3 surface (surface 20). In the embodiment shown in Fig. 7, the topcoat 42 and overcoat 44 as described in the first embodiment of Fig. 1 are formed on the outer surface 14 of the first ply 12. The primer layer 32, optional protective coating 34, solar control coating 36, protective coating 38, and another topcoat 112 (e.g., as described above for the topcoat 42) are formed on the inner surface 16 (or, optionally, on the surface 20). As will be appreciated, the alternative topcoat/overcoat structures of Figs. 4 and/or 5 could also be incorporated into this embodiment of the invention. Alternatively, the portion 30" of the coating stack with the solar control coating can be formed on the No. 2 surface or No. 3 surface and the other portion 30' can be eliminated.

Another embodiment 114 of the invention is shown in Fig. 8. In the above embodiments, the first and second plies 12, 18 were separated by an air gap 26. However, in the embodiment 114 shown in Fig. 8, the plies 12, 18 are laminated. In this embodiment 114, the first ply 12 and second ply 18 are secured by an interlayer 116. The interlayer 116 can be of any desired material and can include one or more layers or plies. The interlayer 116 can be a polymeric or plastic material, such as, for example, polyvinylbutyral, plasticized polyvinyl chloride, or multi-layered thermoplastic materials including polyethyleneterephthalate, polyurethanes, etc. Suitable interlayer materials are disclosed, for example but not to be considered as limiting, in U.S. Patent Nos. 4,287,107 and 3,762,988. The interlayer 116 secures the first and second plies together, provides energy absorption, reduces noise, and increases the strength of the laminated structure. The interlayer 116 can also be a sound-absorbing or attenuating material as described, for example, in U.S. Patent No. 5,796,055. The interlayer 116 can have a solar control coating provided thereon or incorporated therein or can include a colored material to reduce solar energy transmission. In one non-limiting embodiment, the interlayer 116 has a thickness in the range of 0.5 mm to 1.5 mm, such as 0.75 mm to 0.8 mm. Alternatively, the coating 30 can be split as described above with respect to Figs. 6 and 7.

While various aspects of the invention have been described above, other variations are contemplated within the scope of the invention. For example, the transparency can comprise a topcoat 42 (topcoat having a hybrid polymer as described above) formed over, e.g., directly on, a stretched acrylic substrate and an overcoat 44, a silicon oxycarbide coating, such as a DIAMONDSHIELD coating, formed over, e.g., directly on, the topcoat 42. A solar control coating, such as described above, can be formed on another major surface of the substrate.

## Claims

1. An aircraft transparency, comprising:
a stretched acrylic ply having a first major surface and a second major surface;
a topcoat formed over at least a portion of the first major surface of the ply and comprising a polysiloxane material comprising the reaction product of:
(a) a hybrid copolymer comprising:
(i) a first monomer comprising a hydroxy functional organoacrylate; and
(ii) a second monomer comprising an organoalkoxysilane; and
(b) a second material comprising an organoalkoxysilane; and
an overcoat formed over at least a portion of the topcoat and comprising a silicon oxycarbide coating.

2. The transparency of claim 1, comprising:
a first polymeric ply having a first major surface and second major surface;
a second polymeric ply spaced from the first ply and having a third major surface and a fourth major surface; and
a coating stack having solar control properties over at least a portion of one or more of the major surfaces, wherein the coating stack comprises:
- a first primer layer formed over at least a portion of one of the major surfaces, the first primer layer comprising a siloxane-containing material;
- a solar coating formed over at least a portion of the first primer layer, the solar control coating having at least one metallic layer and at least one dielectric layer;
- a protective coating formed over at least a portion of the solar control coating, the protective coating comprising at least one metal oxide;
- a topcoat formed over at least a portion of the protective coating and comprising the polysiloxane material; and
- an overcoat formed over at least a portion of the topcoat and comprising a silicon oxycarbide coating, wherein
at least one of the first and second plies is stretched acrylic.

3. The transparency of claim 2, wherein the first and second plies are separated by an air gap, or wherein the first and second plies are laminated by an interlayer.

4. The transparency of claim 2, wherein the transparency further comprises any one of:
- in the coating stack inner protective coating between the first primer layer and the solar control coating and a second primer layer between the protective coating and the topcoat: or
- an electrochromic assembly spaced from the second ply; or
- a third protective coating between the topcoat and the overcoat.

5. The transparency of claim 2, wherein
- the primer layer comprises an epoxy amino siloxane material; or
- the solar control coating comprises three or more metallic silver layers separated by dielectric layers; or
- the protective coating comprises a mixture of silica and alumina; or
- the topcoat comprises a multi-layer structure having a first layer comprising a polysiloxane material, a second layer comprising one or more metal oxides, and a third layer comprising a polysiloxane material.

6. The transparency of claim 1, comprising:
- a first stretched acrylic ply having a first major surface and a second major surface;
- a second stretched acrylic ply spaced from the first ply and having a third major surface and a fourth major surface; and
- a coating stack having solar control properties applied over at least a portion of one or more of the major surfaces, wherein the coating stack comprises:
- a first primer layer formed over at least a portion of one of the major surfaces, the first primer layer comprising an epoxy amino siloxane-containing material;
- a solar coating formed over at least a portion of the first primer layer, the solar control coating comprising at least three metallic silver layers;
- a protective coating formed over at least a portion of the solar control coating, the protective coating comprising silica and alumina;
- a topcoat formed over at least a portion of the protective coating and comprising the polysiloxane material;
- an overcoat formed over at least a portion of the topcoat and comprising a diamond-like carbon coating, and
- wherein the coating stack optionally further comprises an inner protective coating between the first primer layer and the solar control coating and a second primer layer between the protective coating and the topcoat.

7. The transparency of any of claim 2 or 6, wherein the coating stack is formed over at least a portion of the first major surface.

8. The transparency of claim 1, wherein
- the first monomer is selected from a hydroxy functional acrylate and/or a hydroxyalkylacrylate, especially wherein the first monomer is selected from the group consisting of hydroxymethylacrylate, hydroxyethylacrylate, and hydroxypropylacrylate; or
- the second monomer is a trialkoxysilane, especially wherein the second monomer is selected from trialkoxysilane; methyltrimethoxysilane; and methacryloxypropyltrimethoxysilane.

9. The transparency of claim 1, further comprising a coating stack over at least a portion of the second surface.

10. The transparency of claim 9, wherein the coating stack comprises:
- a first primer layer formed over at least a portion of the second major surface, the first primer layer comprising an epoxy amino siloxane-containing material;
- a solar coating formed over at least a portion of the first primer layer, the solar control coating comprising at least three metallic silver layers; and
- a protective coating formed over at least a portion of the solar control coating, the protective coating comprising silica and alumina;
- optionally a topcoat formed over at least a portion of the protective coating and comprising a polysiloxane material;
- optionally an overcoat formed over at least a portion of the topcoat and comprising a diamond-like carbon coating.

11. A method of making an aircraft transparency, comprising the steps of:
- providing a first stretched acrylic ply having a first major surface and a second major surface;
- providing a second stretched acrylic ply having a third major surface and a fourth major surface; and
- providing a coating stack having solar control properties over at least a portion of one or more of the major surfaces, wherein the coating stack comprises:
- a first primer layer formed over at least a portion of one of the major surfaces, the first primer layer comprising an epoxy amino siloxane-containing material;
- a solar coating formed over at least a portion of the first primer layer, the solar control coating comprising at least three metallic silver layers;
- a protective coating formed over at least a portion of the solar control coating, the protective coating comprising silica and alumina;
- a topcoat formed over at least a portion of the protective coating and comprising a polysiloxane material comprising the reaction product of:
(a) a hybrid copolymer comprising:
(i) a first monomer comprising a hydroxy functional organoacrylate; and
(ii) a second monomer comprising an organoalkoxysilane; and
(b) a second material comprising an organoalkoxysilane; and
- an overcoat formed over at least a portion of the topcoat and comprising a diamond-like carbon coating.

## Patentansprüche

1. Ein Flugzeugfenster umfassend:
eine gestreckte Acryllage aufweisend eine erste Hauptoberfläche und eine zweite Hauptoberfläche,
eine Deckschicht, die über wenigstens einem Teil der ersten Hauptoberfläche der Lage gebildet ist und ein Polysiloxanmaterial umfasst,
das das Reaktionsprodukt von:
(a) einem Hybridcopolymer umfassend:
(i) ein erstes Monomer umfassend ein hydroxylfunktionelles Organoacrylat, und
(ii) ein zweites Monomer umfassend ein Organoalkoxysilan, und
(b) einem zweiten Material umfassend ein Organoalkoxysilan umfasst, und
einen Überzug, der über wenigstens einem Teil der Deckschicht ausgebildet ist und eine Siliziumoxycarbidbeschichtung umfasst.

2. Das Fenster des Anspruchs 1 umfassend:
eine erste polymere Lage aufweisend eine erste Hauptoberfläche und eine zweite Hauptoberfläche,
eine zweite polymere Lage, beabstandet von der ersten Lage und
aufweisend eine dritte Hauptoberfläche und eine vierte Hauptoberfläche, und
einen Beschichtungsstapel aufweisend Sonnenschutzeigenschaften über wenigstens einem Teil von einer oder mehrerer der Hauptoberflächen,
wobei der Beschichtungsstapel umfasst:
- eine erste Grundierungsschicht ausgebildet über wenigstens einem Teil von einer der Hauptoberflächen, wobei die erste Grundierungsschicht ein Siloxan enthaltendes Material umfasst,
- eine Sonnenschutzbeschichtung ausgebildet über wenigstens einem Teil der ersten Grundierungsschicht, wobei die Sonnenschutzbeschichtung wenigstens eine metallische Schicht und wenigstens eine dielektrische Schicht aufweist,
- eine Schutzbeschichtung ausgebildet über wenigstens einem Teil der Sonnenschutzbeschichtung, wobei die Schutzbeschichtung wenigstens ein Metalloxid umfasst,
- eine Deckschicht, die über wenigstens einem Teil der Schutzbeschichtung ausgebildet ist und das Polysiloxanmaterial umfasst, und
- einen Überzug, der über wenigstens einem Teil der Deckschicht ausgebildet ist und eine Siliziumoxycarbidbeschichtung umfasst, wobei wenigstens eine von den ersten und zweiten Lagen eine gestreckte Acryllage ist.

3. Das Fenster des Anspruchs 2, wobei die ersten und zweiten Lagen durch einen Luftspalt getrennt sind, oder wobei die ersten und zweiten Lagen durch eine Zwischenlage miteinander laminiert sind.

4. Das Fenster des Anspruchs 2, wobei das Fenster des Weiteren irgendeines der Folgenden umfasst:
- in dem Beschichtungsstapel eine innere Schutzbeschichtung zwischen der ersten Grundierungsschicht und der Sonnenschutzbeschichtung und eine zweite Grundierungsschicht zwischen der Schutzbeschichtung und der Deckschicht, oder
- eine elektrochrome Anordnung beabstandet von der zweiten Lage, oder
- eine dritte Schutzbeschichtung zwischen der Deckschicht und dem Überzug.

5. Das Fenster des Anspruchs 2, wobei
- die Deckschicht ein Epoxyaminosiloxanmaterial umfasst, oder
- die Sonnenschutzbeschichtung drei oder mehr metallische Silberschichten, getrennt durch dielektrische Schichten, umfasst, oder
- die Schutzbeschichtung eine Mischung von Siliziumoxid und Aluminiumoxid umfasst, oder
- die Deckschicht eine Mehrschichtstruktur aufweisend eine erste Schicht, die ein Polysiloxanmaterial umfasst, eine zweite Schicht, die ein oder mehrere Metalloxide umfasst, und eine dritte Schicht umfassend ein Polysiloxanmaterial umfasst.

6. Das Fenster des Anspruchs 1 umfassend:
- eine erste gestreckte Acryllage aufweisend eine erste Hauptoberfläche und eine zweite Hauptoberfläche,
- eine zweite gestreckte Acryllage beabstandet von der ersten Lage und aufweisend eine dritte Hauptoberfläche und eine vierte Hauptoberfläche, und
- einen Beschichtungsstapel aufweisend Sonnenschutzeigenschaften, aufgebracht über wenigstens einem Teil von einer oder mehrerer der Hauptoberflächen, wobei der Beschichtungsstapel umfasst:
- eine erste Grundierungsschicht, ausgebildet über wenigstens einem Teil von einer der Hauptoberflächen, wobei die erste Grundierungsschicht ein Epoxyaminosiloxan enthaltendes Material umfasst,
- eine Sonnenschutzbeschichtung, ausgebildet über wenigstens einem Teil der ersten Grundierungsschicht, wobei die Sonnenschutzbeschichtung wenigstens drei metallische Silberschichten umfasst,
- eine Schutzbeschichtung, ausgebildet über wenigstens einem Teil der Sonnenschutzbeschichtung, wobei die Schutzbeschichtung Siliziumoxid und Aluminiumoxid umfasst,
- eine Deckschicht, ausgebildet über wenigstens einem Teil der Schutzbeschichtung und umfassend das Polysiloxanmaterial,
- einen Überzug ausgebildet über wenigstens einem Teil der Deckschicht und umfassend eine Beschichtung aus diamantartigem Kohlenstoff, und
- wobei der Beschichtungsstapel wahlweise des Weiteren eine innere Schutzbeschichtung zwischen der ersten Grundierungsschicht und der Sonnenschutzbeschichtung und eine zweite Grundierungsschicht zwischen der Schutzbeschichtung und der Deckschicht umfasst.

7. Das Fenster gemäß irgendeinem der Ansprüche 2 oder 6, wobei der Beschichtungsstapel über wenigstens einem Teil von der ersten Hauptoberfläche ausgebildet ist.

8. Das Fenster des Anspruchs 1, wobei
- das erste Monomer aus einem hydroxyfunktionellen Acrylat und/oder einem Hydroxyalkylacrylat ausgewählt ist, wobei im Speziellen das erste Monomer aus der Gruppe bestehend aus Hydroxymethylacrylat, Hydroxyethylacrylat und Hydroxypropylacrylat ausgewählt ist, oder
- das zweite Monomer ein Trialkoxysilan ist, wobei im Speziellen das zweite Monomer aus Trialkoxysilan, Methyltrimethoxysilan und Methacryloxypropyltrimethoxysilan ausgewählt ist.

9. Das Fenster des Anspruchs 1, des Weiteren umfassend einen Beschichtungsstapel über wenigstens einem Teil der zweiten Oberfläche.

10. Das Fenster des Anspruchs 9, wobei der Beschichtungsstapel umfasst:
- eine erste Grundierungsschicht, ausgebildet über wenigstens einem Teil der zweiten Hauptoberfläche, wobei die erste Grundierungsschicht ein Epoxyaminosiloxan enthaltendes Material umfasst,
- eine Sonnenschutzbeschichtung, ausgebildet über wenigstens einem Teil der ersten Grundierungsschicht, wobei die Sonnenschutzbeschichtung wenigstens drei metallische Silberschichten umfasst, und
- eine Schutzbeschichtung, ausgebildet über wenigstens einem Teil der Sonnenschutzbeschichtung, wobei die Schutzbeschichtung Siliziumoxid und Aluminiumoxid umfasst,
- wahlweise eine Deckschicht ausgebildet über wenigstens einem Teil der Schutzbeschichtung und umfassend ein Polysiloxanmaterial,
- wahlweise einen Überzug ausgebildet über wenigstens einem Teil der Deckschicht und umfassend eine Beschichtung aus diamantähnlichem Kohlenstoff.

11. Ein Verfahren zur Herstellung eines Flugzeugfensters umfassend die Schritte des:
- Bereitstellens einer ersten gestreckten Acryllage aufweisend eine erste Hauptoberfläche und eine zweite Hauptoberfläche,
- Bereitstellens einer zweiten gestreckten Acryllage aufweisend eine dritte Hauptoberfläche und eine vierte Hauptoberfläche, und
- Bereitstellens eines Beschichtungsstapels aufweisend Sonnenschutzeigenschaften über wenigstens einem Teil von einer oder mehrerer der Hauptoberflächen, wobei der Beschichtungsstapel umfasst:
- eine erste Grundierungsschicht ausgebildet über wenigstens einem Teil von einer der Hauptoberflächen, wobei die erste Grundierungsschicht ein Epoxyaminosiloxan enthaltendes Material umfasst,
- eine Sonnenschutzbeschichtung ausgebildet über wenigstens einem Teil der ersten Grundierungsschicht, wobei die Sonnenschutzbeschichtung wenigstens drei metallische Silberschichten umfasst,
- eine Schutzbeschichtung ausgebildet über wenigstens einem Teil der Sonnenschutzbeschichtung, wobei die Schutzbeschichtung Siliziumoxid und Aluminiumoxid umfasst,
- eine Deckschicht ausgebildet über wenigstens einem Teil der Schutzschicht und umfassend ein Polysiloxanmaterial umfassend das Reaktionsprodukt von:
(a) einem Hybridcopolymer umfassend:
(i) ein erstes Monomer umfassend ein hydroxyfunktionelles Organoacrylat und
(ii) ein zweites Monomer umfassend ein Organoalkoxysilan, und
(b) einem zweiten Material umfassend ein Organoalkoxysilan, und
- einen Überzug ausgebildet über wenigstens einem Teil der Deckschicht und umfassend eine Beschichtung aus diamantähnlichem Kohlenstoff.

## Revendications

1. Vitrage d'avion, comprenant :
un pli acrylique étiré, ayant une première surface majeure et une deuxième surface majeure ;
une couche supérieure, formée sur au moins une partie de la première surface majeure du pli et comprenant un matériau en polysiloxane, comprenant le produit de réaction de :
(a) un copolymère hybride, comprenant :
(i) un premier monomère, comprenant un organoacrylate à fonction hydroxy et
(ii) un second monomère, comprenant un organoalkoxysilane et
(b) un second matériau, comprenant un organoalkoxysilane et
une couche de finition, formée sur au moins une partie de la couche supérieure et comprenant un revêtement en oxycarbure de silicium.

2. Vitrage selon la revendication 1, comprenant :
un premier pli polymère, ayant une première surface majeure et une deuxième surface majeure ;
un second pli polymère, espacé du premier pli et ayant une troisième surface majeure et une quatrième surface majeure et
un empilement de revêtements, ayant des propriétés de contrôle solaire sur au moins une partie d'une ou plusieurs des surfaces majeures, dans lequel l'empilement de revêtement comprend :
- une première couche primaire, formée sur au moins une partie d'une des surfaces majeures, la première couche primaire comprenant un matériau contenant du siloxane ;
- un revêtement solaire, formé sur au moins une partie de la première couche primaire, le revêtement de contrôle solaire ayant au moins une couche métallique et au moins une couche diélectrique ;
- un revêtement protecteur, formé sur au moins une partie du revêtement de contrôle solaire, le revêtement protecteur comprenant au moins un oxyde métallique ;
- une couche supérieure, formée sur au moins une partie du revêtement protecteur et comprenant le matériau en polysiloxane et
- une couche de finition, formée sur au moins une partie de la couche supérieure et comprenant un revêtement en oxycarbure de silicium,
dans lequel au moins un pli parmi les premier et second plis est de l'acrylique étiré.

3. Vitrage selon la revendication 2, dans lequel les premier et second plis sont séparés par un entrefer ou dans lequel les premier et second plis sont laminés par une couche intermédiaire.

4. Vitrage selon la revendication 2, dans lequel le vitrage comprend en outre l'un quelconque des éléments parmi :
- un revêtement protecteur interne dans l'empilement de revêtement entre la première couche primaire et le revêtement de contrôle solaire et une seconde couche primaire entre le revêtement protecteur et la couche supérieure ou
- un ensemble électrochromique, espacé du second pli ou
- un troisième revêtement protecteur entre la couche supérieure et la couche de finition.

5. Vitrage selon la revendication 2, dans lequel
- la couche primaire comprend un matériau époxy amino-siloxane ou
- le revêtement de contrôle solaire comprend trois couches d'argent métallique ou plus, séparées par des couches diélectriques ou
- le revêtement protecteur comprend un mélange de silice et d'alumine ou
- la couche supérieure comprend une structure multicouches ayant une première couche, comprenant un matériau en polysiloxane, une deuxième couche, comprenant un ou plusieurs oxydes métalliques et une troisième couche, comprenant un matériau en polysiloxane.

6. Vitrage selon la revendication 1, comprenant :
- un premier pli acrylique étiré, ayant une première surface majeure et une deuxième surface majeure ;
- un second pli acrylique étiré, espacé du premier pli et ayant une troisième surface majeure et une quatrième surface majeure et
- un empilement de revêtement, ayant des propriétés de contrôle solaire, appliquées sur au moins une partie d'une ou plusieurs des surfaces majeures, dans lequel l'empilement de revêtement comprend :
- une première couche primaire, formée sur au moins une partie de l'une des surfaces majeures, la première couche primaire comprenant un matériau, contenant de l'époxy amino-siloxane ;
- un revêtement solaire, formé sur au moins une partie de la première couche primaire, le revêtement de contrôle solaire comprenant au moins trois couches d'argent métalliques ;
- un revêtement protecteur, formé sur au moins une partie du revêtement de contrôle solaire, le revêtement protecteur comprenant de la silice et de l'alumine ;
- une couche supérieure, formée sur au moins une partie du revêtement protecteur et comprenant le matériau en polysiloxane ;
- une couche de finition, formée sur au moins une partie de la couche supérieure et comprenant un revêtement en carbone, similaire à du diamant et
- dans lequel l'empilement de revêtement comprend en outre en option un revêtement protecteur intérieur entre la première couche primaire et le revêtement de contrôle solaire et une seconde couche primaire entre le revêtement protecteur et la couche supérieure.

7. Vitrage selon l'une quelconque des revendications 2 ou 6, dans lequel l'empilement de revêtement est formé sur au moins une partie de la première surface majeure.

8. Vitrage selon la revendication 1, dans lequel
- le premier monomère est sélectionné parmi un acrylate à fonction hydroxy et / ou un acrylate d'hydroxyalkyle, en particulier dans lequel le premier monomère est sélectionné dans le groupe se composant d'acrylate d'hydroxyméthyle, d'acrylate d'hydroxyéthyle et d'acrylate d'hydroxypropyle ou
- le second monomère est un trialkoxysilane, en particulier dans lequel le second monomère est sélectionné parmi le trialkoxysilane, le méthyltriméthoxysilane et le méthacryloxypropyltriméthoxysilane.

9. Vitrage selon la revendication 1, comprenant en outre un empilement de revêtement sur au moins une partie de la seconde surface.

10. Vitrage selon la revendication 9, dans lequel l'empilement de revêtement comprend :
- une première couche primaire, formée sur au moins une partie de la deuxième surface majeure, la première couche primaire comprenant un matériau contenant de l'époxy amino-siloxane ;
- un revêtement solaire, formé sur au moins une partie de la première couche primaire, le revêtement de contrôle solaire comprenant au moins trois couches d'argent métallique et
- un revêtement protecteur, formé sur au moins une partie du revêtement de contrôle solaire, le revêtement protecteur comprenant de la silice et de l'alumine ;
- une couche supérieure en option, formée sur au moins une partie du revêtement protecteur et comprenant un matériau en polysiloxane ;
- une couche de finition en option, formée sur au moins une partie de la couche supérieure et comprenant un revêtement en carbone, similaire à du diamant.

11. Procédé de fabrication d'un vitrage d'avion, comprenant les étapes, consistant à :
- prévoir un premier pli acrylique étiré, ayant une première surface majeure et une deuxième surface majeure ;
- prévoir un second pli acrylique étiré, ayant une troisième surface majeure et une quatrième surface majeure et
- prévoir un empilement de revêtement ayant des propriétés de contrôle solaire sur au moins une partie d'une ou plusieurs des surfaces majeures, dans lequel l'empilement de revêtement comprend :
- une première couche primaire, formée sur au moins une partie de l'une des surfaces majeures, la première couche primaire comprenant un matériau contenant de l'époxy amino-siloxane ;
- un revêtement solaire, formé sur au moins une partie de la première couche primaire, le revêtement de contrôle solaire comprenant au moins trois couches d'argent métallique ;
- un revêtement protecteur, formé sur au moins une partie du revêtement de contrôle solaire, le revêtement protecteur comprenant de la silice et de l'alumine ;
- une couche supérieure, formée sur au moins une partie du revêtement protecteur et comprenant un matériau en polysiloxane, comprenant le produit de réaction de :
(a) un copolymère hybride, comprenant :
(i) un premier monomère, comprenant un organoacrylate à fonction hydroxy et
(ii) un second monomère, comprenant un organoalkoxysilane et
(b) un second matériau, comprenant un organoalkoxysilane et
- une couche de finition, formée sur au moins une partie de la couche supérieure et comprenant un revêtement en carbone, similaire à du diamant.
